(19) **Europäisches Patentamt / European Patent Office / Office européen des brevets**

(11) **EP 1 984 860 B1**

(12) **EUROPEAN PATENT SPECIFICATION**

(45) Date of publication and mention of the grant of the patent:
**15.06.2022 Bulletin 2022/24**

(21) Application number: **07762829.5**

(22) Date of filing: **31.01.2007**

(51) International Patent Classification (IPC):
**G06F 30/20** (2020.01)    **E21B 43/00** (2006.01)
**G06F 111/02** (2020.01)    **G06F 111/10** (2020.01)
**G06F 113/14** (2020.01)

(52) Cooperative Patent Classification (CPC):
**E21B 43/00; G06F 30/20;** E21B 2200/22;
G06F 2111/02; G06F 2111/10; G06F 2113/14

(86) International application number:
**PCT/US2007/002619**

(87) International publication number:
**WO 2007/089829 (09.08.2007 Gazette 2007/32)**

(54) **METHODS, SYSTEMS, AND COMPUTER-READABLE MEDIA FOR FAST UPDATING OF OIL AND GAS FIELD PRODUCTION MODELS WITH PHYSICAL AND PROXY SIMULATORS**

VERFAHREN, VORRICHTUNG UND RECHNERLESBARES MEDIUM ZUM AKTUALISIEREN VON ÖL UND GASFELD PRODUKTIONS MODELLEN MIT HILFE VON PHYSIKALISCHEN UND PROXY SIMULATOREN

PROCÉDÉS, SYSTÈMES, ET SUPPORTS LISIBLES PAR ORDINATEUR POUR LA MISE À JOUR RAPIDE DE MODÈLES DE PRODUCTION DE CHAMPS DE PÉTROLE ET DE GAZ À L'AIDE DE SIMULATEURS PHYSIQUES ET MANDATAIRES

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.01.2006 US 763973 P**

(43) Date of publication of application:
**29.10.2008 Bulletin 2008/44**

(73) Proprietor: **LANDMARK GRAPHICS CORPORATION**
**Houston, TX 77042-3021 (US)**

(72) Inventors:
- **CULLICK, Alvin, Stanley**
**Houston, TX 77057 (US)**
- **JOHNSON, William, Douglas**
**Austin, TX 78731 (US)**

(74) Representative: **Turner, Craig Robert**
**AA Thornton IP LLP**
**Octagon Point**
**5 Cheapside**
**London EC2V 6AA (GB)**

(56) References cited:
**US-A1- 2004 010 374**    **US-A1- 2004 220 790**
**US-A1- 2004 254 734**    **US-A1- 2005 096 893**

- **LECHNER J P ET AL: "Treating Uncertainties in Reservoir Performance Prediction with Neural Networks" SPE PROCEEDINGS, XX, XX, no. 94357, 13 June 2005 (2005-06-13), pages 1-8, XP002438774**
- **LANDA J L ET AL: "History match and associated forecast uncertainty analysis - Practical approaches using cluster computing" INT. PET. TECHNOL. CONF. PROC.; 2005 INTERNATIONAL PETROLEUM TECHNOLOGY CONFERENCE PROCEEDINGS; 2005 INTERNATIONAL PETROLEUM TECHNOLOGY CONFERENCE PROCEEDINGS 2005, 2005, pages 1319-1328, XP002444470**
- **DEJEAN J ET AL: "Managing uncertainties on production predictions using integrated statistical methods" SPE PAPERS, XX, XX, no. SPE 56696, 3 October 1999 (1999-10-03), pages 1-15, XP002358198**

**(Cont. next page)**

- RODRIGUES J R P: "Calculating derivatives for history matching in reservoir simulators" SPE RESERVOIR SIMUL. SYMP. PROC.; SPE RESERVOIR SIMULATION SYMPOSIUM, PROCEEDINGS; 2005 SPE RESERVOIR SIMULATION SYMPOSIUM, PROCEEDINGS 2005, 2005, pages 527-535, XP002444471
- Astrid Jourdan ET AL: "Response Surface Designs for Scenario Management and Uncertainty Quantification in Reservoir Production", Mathematical geology, vol. 36, no. 8, 1 November 2004 (2004-11-01), pages 965-985, XP055214389, ISSN: 0882-8121, DOI: 10.1023/B:MATG.0000048801.30621.04
- ZABALZA-MEZGHANI I ET AL: "Uncertainty management: From geological scenarios to production scheme optimization", JOURNAL OF PETROLEUM SCIENCE AND ENGINEERING, ELSEVIER, AMSTERDAM, NL, vol. 44, no. 1-2, 31 October 2004 (2004-10-31), pages 11-25, XP004613306, ISSN: 0920-4105, DOI: 10.1016/J.PETROL.2004.02.002
- QUEIPO N V ET AL: "Surrogate modeling-based optimization for the integration of static and dynamic data into a reservoir description", JOURNAL OF PETROLEUM SCIENCE AND ENGINEERING, ELSEVIER, AMSTERDAM, NL, vol. 35, 1 January 2002 (2002-01-01), pages 167-181, XP002533534, ISSN: 0920-4105, DOI: 10.1016/S0920-4105(02)00238-3
- HAMBY D M ED - FARUQUE FAZLAY S: "A Review of Techniques for Parameter Sensitivity Analysis of Environmental Models", ENVIRONMENTAL MONITORING AND ASSESSMENT, KLUWER ACADEMIC PUBLISHERS, DORDRECHT, NL, vol. 32, 30 September 1994 (1994-09-30), pages 135-154, XP002631031, ISSN: 0167-6369
- Isukapalli Sastry S: "UNCERTAINTY ANALYSIS OF TRANSPORT-TRANSFORMATION MODELS", , 1 January 1999 (1999-01-01), XP055878364, Retrieved from the Internet: URL:https://citeseerx.ist.psu.edu/viewdoc/download?doi=10.1.1.473.402&rep=rep1&type=pdf [retrieved on 2022-01-12]

**Description**

TECHNICAL FIELD

The present invention is related to the optimization of oil and gas field production. More particularly, the present invention is related to the use of physical and proxy simulators for improving production decisions related to oil and gas fields.

BACKGROUND

Reservoir and production engineers tasked with modeling or managing large oil fields containing hundreds of wells are faced with the reality of only being able to physically evaluate and manage a few individual wells per day. Individual well management may include performing tests to measure the rate of oil, gas, and water coming out of an individual well (from below the surface) over a test period. Other tests may include tests for measuring the pressure above and below the surface as well as the flow of fluid at the surface. As a result of the time needed to manage individual wells in an oil field, production in large oil fields is managed by periodically (e.g., every few months) measuring fluids at collection points tied to multiple wells in an oil field and then allocating the measurements from the collection points back to the individual wells. Data collected from the periodic measurements is analyzed and used to make production decisions including optimizing future production. The collected data, however, may be several months old when it is analyzed and thus is not useful in real time management decisions. In addition to the aforementioned time constraints, multiple analysis tools may be utilized which making it difficult to construct a consistent analysis of a large field. These tools may be multiple physics-based simulators or analytical equations representing oil, gas, and water flow and processing.

In order to improve efficiency in oil field management, sensors have been installed in oil fields in recent years for continuously monitoring temperatures, fluid rates, and pressures. As a result, production engineers have much more data to analyze than was generated from previous periodic measurement methods. However, the increased data makes it difficult for production engineers to react to the data in time to respond to detected issues and make real time production decisions. For example, current methods enable the real time detection of excess water in the fluids produced by a well but do not enable an engineer to quickly respond to this data in order to change valve settings to reduce the amount of water upon detection of the excess water. Further developments in recent years have resulted in the use of computer models for optimizing oil field management and production. In particular, software models have been developed for reservoirs, wells, and gathering system performance in order to manage and optimize production. Typical models used include reservoir simulation, well nodal analysis, and network simulation physics-based or physical models. Currently, the use of physics-based models in managing production is problematic due to the length of time the models take to execute. Moreover, physics-based models must be "tuned" to field-measured production data (pressures, flow rates, temperatures, etc,) for optimizing production. Tuning is accomplished through a process of "history matching," which is complex, time consuming, and often does not result in producing unique models. For example, the history matching process may take many months for a specialist reservoir or production engineer. Furthermore, current history match algorithms and workflows for assisted or automated history matching are complex and cumbersome. In particular, in order to account for the many possible parameters in a reservoir system that could effect production predictions, many runs of one or more physics-based simulators would need to be executed, which is not practical in the industry.

It is with respect to these and other considerations that the present invention has been made.

SUMMARY

Illustrative embodiments of the present invention address these issues and others by providing for fast updating of oil and gas field production models using physical and proxy simulators. One illustrative embodiment includes a method for establishing a base model of a physical system in one or more physics-based simulators. The physical system includes a reservoir, a well, a pipeline network, and a processing system. The one or more simulators simulate the flow of fluids in the reservoir, well, pipeline network, and processing system. The method further includes using a decision management system to define uncertain parameters of the physical system for matching with observed data. The uncertain parameters include permeability, fault transmissibility, pore volume, and well skin parameters. The method further includes defining a boundary limits and an uncertainty distribution for each of the uncertain parameters of the physical system through an experimental design process, automatically executing the one or more simulators over a set of design parameters to generate a series of outputs, the set of design parameters comprising the uncertain parameters and the outputs representing production predictions, collecting characterization data in a relational database, the characterization data comprising values associated with the set of design parameters and values associated with the outputs from the one or more simulators, fitting relational data comprising a series of inputs, the inputs comprising the values associated with the set of design parameters, to the outputs of the one or more simulators using a proxy model or equation system for the physical system. The proxy model may be a neural network and is used to calculate derivatives with respect to design parameters to determine sensitivities and compute correlations between the design parameters and the outputs of the one or more simulators. The method further includes eliminating the design parameters from the proxy model for which the sensitivities are below a threshold, using an optimizer with the proxy model to determine design parameter value ranges, for the design parameters which were not eliminated from the proxy model, for which outputs from the proxy model match observed data, the design parameters which were not eliminated then being designated as selected parameters, placing the selected parameters and their ranges from the proxy model into the decision management system, running the decision management system as a global optimizer to validate the selected parameters in the one or more simulators, and using the validated selected parameters from the one or more simulators for production decisions.

Other illustrative embodiments of the invention are implemented in a computer system or as an article of manufacture such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process.

These and various other features, as well as advantages, which characterize the present invention, will be apparent from a reading of the following detailed description and a review of the associated drawings.

DESCRIPTION OF THE DRAWINGS

FIGURE 1 is a simplified block diagram of an operating environment which may be utilized in accordance with the illustrative embodiments of the present invention;

FIGURE 2 is a simplified block diagram illustrating a computer system in the operating environment of FIGURE 1, which may be utilized for performing various illustrative embodiments of the present invention; and

FIGURE 3 is a flow diagram showing an illustrative routine for fast updating of oil and gas field production models with physical and proxy simulators, according to an illustrative embodiment of the present invention.

DETAILED DESCRIPTION

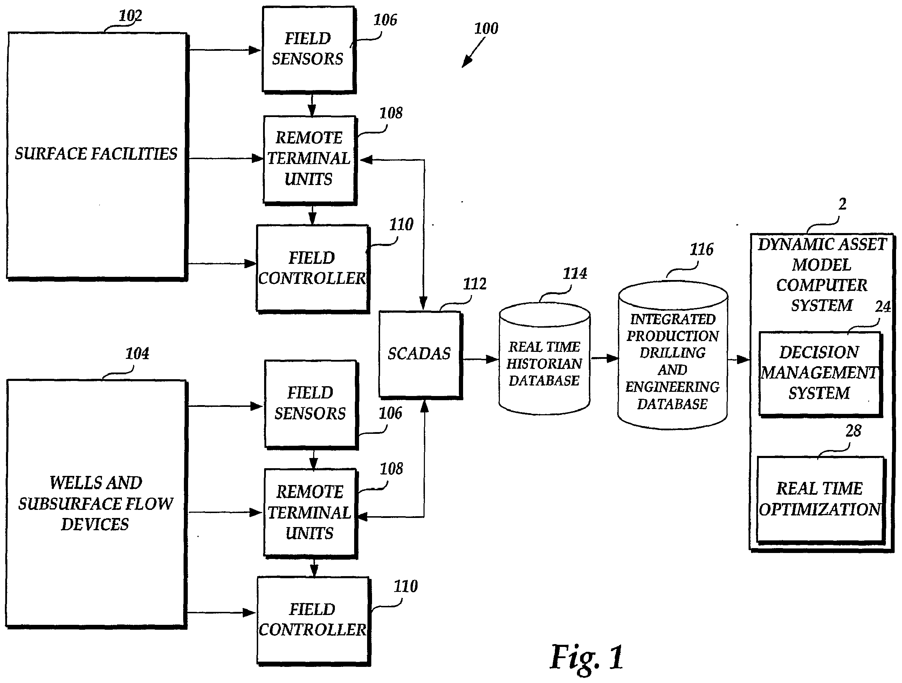

Illustrative embodiments of the present invention provide for fast updating of oil and gas field production models using physical and proxy simulators. Referring now to the drawings, in which like numerals represent like elements, various aspects of the present invention will be described. In particular, FIGURE 1 and the corresponding discussion are intended to provide a brief, general description of a suitable operating environment in which embodiments of the invention may be implemented.

Embodiments of the present invention may be generally employed in the operating environment 100 as shown in FIGURE 1. The operating environment 100 includes oilfield surface facilities 102 and wells and subsurface flow devices 104. The oilfield surface facilities 102 may include any of a number of facilities typically used in oil and gas field production. These facilities may include, without limitation, drilling rigs, blow out preventers, mud pumps, and the like. The wells and subsurface flow devices may include, without limitation, reservoirs, wells, and pipeline networks (and their associated hardware). It should be understood that as discussed in the following description and in the appended claims, production may include oil and gas field drilling and exploration.

The surface facilities 102 and the wells and subsurface flow devices 104 are in communication with field sensors 106, remote terminal units 108, and field controllers 110, in a manner know to those skilled in the art. The field sensors 106 measure various surface and sub-surface properties of an oilfield (i.e., reservoirs, wells, and pipeline networks) including, but not limited to, oil, gas, and water production rates, water injection, tubing head, and node pressures, valve settings at field, zone, and well levels. In one embodiment of the invention, the field sensors 106 are capable of taking continuous measurements in an oilfield and communicating data in real-time to the remote terminal units 108. It should be appreciated by those skilled in the art that the operating environment 100 may include "smart fields" technology which enables the measurement of data at the surface as well as below the surface in the wells themselves. Smart fields also enable the measurement of individual zones and reservoirs in an oil field. The field controllers 110 receive the data measured from the field sensors 106 and enable field monitoring of the measured data.

The remote terminal units 108 receive measurement data from the field sensors 106 and communicate the measurement data to one or more Supervisory Control and Data Acquisition systems ("SCADAs") 112. As is known to those skilled in the art, SCADAs are computer systems for gathering and analyzing real time data. The SCADAs 112 communicate received measurement data to a real-time historian database 114. The real-time historian database 114 is in communication with an integrated production drilling and engineering database 116 which is capable of accessing the measurement data.

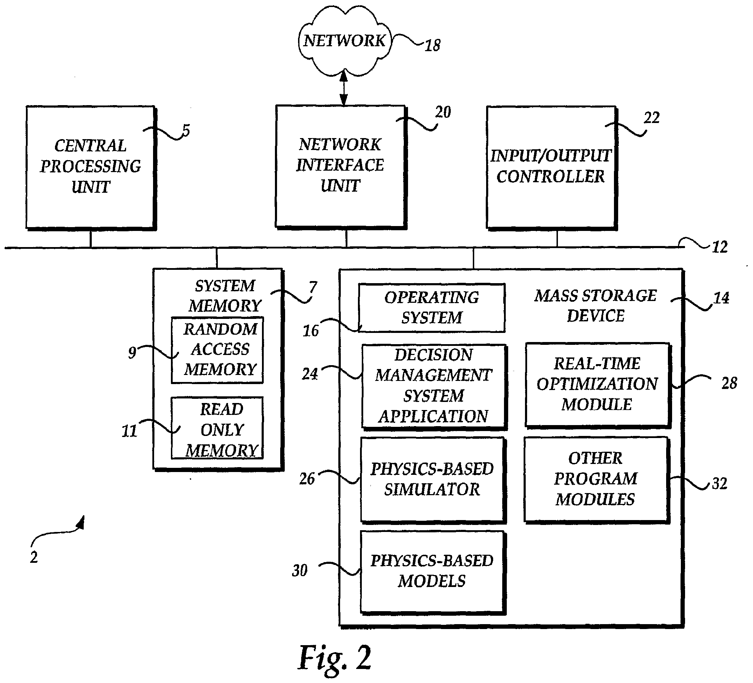

The integrated production drilling and engineering database 116 is in communication with a dynamic asset model computer system 2. In the various illustrative embodiments of the invention, the computer system 2 executes various program modules for fast updating of oil and gas field production models using physical and proxy simulators. Generally, program modules include routines, programs, components, data structures, and other types of structures that perform particular tasks or implement particular abstract data types. The program modules include a decision management system ("DMS") application 24 and a real-time optimization program module 28. The computer system 2 also includes additional program modules which will be described below in the description of FIGURE 2. It will be appreciated that the communications between the field sensors 106, the remote terminal units 108, the field controllers 110, the SCADAs 112, the databases 114 and 116, and the computer system 2 may be enabled using communication links over a local area or wide area network in a manner known to those skilled in the art.

As will be discussed in greater detail below with respect to FIGURES 2-3, the computer system 2 uses the DMS application 24 in conjunction with a physical or physics-based simulators and a proxy model (as a proxy simulator) for fast updating of oil and gas field production models used in an oil or gas field. The core functionality of the DMS application 24 is described in detail in co-pending U.S. Published Patent Application 2004/0220790, entitled "Method and System for Scenario and Case Decision Management." The real-time optimization program module 28 uses the aforementioned proxy model to determine parameter value ranges for outputs which match real-time observed data measured by the field sensors 106.

Referring now to FIGURE 2, an illustrative computer architecture for the computer system 2 which is utilized in the various embodiments of the invention, will be described. The computer architecture shown in FIGURE 2 illustrates a conventional desktop or laptop computer, including a central processing unit 5 ("CPU"), a system memory 7, including a random access memory 9 ("RAM") and a read-only memory ("ROM") 11, and a system bus 12 that couples the memory to the CPU 5. A basic input/output system containing the basic routines that help to transfer information between elements within the computer, such as during startup, is stored in the ROM 11. The computer system 2 further includes a mass storage device 14 for storing an operating system 16, DMS application 24, a physics-based simulator 26, real-time optimization module 28, physics-based models 30, and other program modules 32. These modules will be described in greater detail below.

It should be understood that the computer system 2 for practicing embodiments of the invention may also be representative of other computer system configurations, including hand-held devices, multiprocessor systems, microprocessor-based or programmable consumer electronics, minicomputers, mainframe computers, and the like. Embodiments of the invention may also be practiced in distributed computing environments where tasks are performed by remote processing devices that are linked through a communications network. In a distributed computing environment, program modules may be located in both local and remote memory storage devices.

The mass storage device 14 is connected to the CPU 5 through a mass storage controller (not shown) connected to the bus 12. The mass storage device 14 and its associated computer-readable media provide non-volatile storage for the computer system 2. Although the description of computer-readable media contained herein refers to a mass storage device, such as a hard disk or CD-ROM drive, it should be appreciated by those skilled in the art that computer-readable media can be any available media that can be accessed by the computer system 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, digital versatile disks ("DVD"), or other optical storage, magnetic cassettes, magnetic tape, magnetic disk storage or other magnetic storage devices, or any other medium which can be used to store the desired information and which can be accessed by the computer system 2.

According to various embodiments of the invention, the computer system 2 may operate in a networked environment using logical connections to remote computers, databases, and other devices through the network 18. The computer system 2 may connect to the network 18 through a network interface unit 20 connected to the bus 12. Connections which may be made by the network interface unit 20 may include local area network ("LAN") or wide area network ("WAN") connections. LAN and WAN networking environments are commonplace in offices, enterprise-wide computer networks, intranets, and the Internet. It should be appreciated that the network interface unit 20 may also be utilized to connect to other types of networks and remote computer systems. The computer system 2 may also include an input/output controller 22 for receiving and processing input from a number of other devices, including a keyboard, mouse, or electronic stylus (not shown in FIGURE 2). Similarly, an input/output controller 22 may provide output to a display screen, a printer, or other type of output device.

As mentioned briefly above, a number of program modules may be stored in the mass storage device 14 of the computer system 2, including an operating system 16 suitable for controlling the operation of a networked personal computer. The mass storage device 14 and RAM 9 may also store one or more program modules. In one embodiment, the DMS application 24 is utilized in conjunction with one or more physics-based simulators 26, real-time optimization module 28, and the physics-based models 30 to optimize production control parameters for real-time use in an oil or gas field. As is known to those skilled in the art, physics-based simulators utilize equations representing physics of fluid flow and chemical conversion. Examples of physics-based simulators include, without limitation, reservoir simulators, pipeline flow simulators, and process simulators (e.g. separation simulators). In particular, the DMS application 24 may be utilized for defining sets of parameters in a physics-based or physical model that are unknown and that may be adjusted so that the physics-based simulator 26 may match real-time data that is actually observed in an oil or gas field. As discussed above in the discussion of FIGURE 1, the real-time data is measurement data received by the field sensors 106 through continuous monitoring. The physics-based simulator 26 is operative to create physics-based models representing the operation of physical systems such as reservoirs, wells, and pipeline networks in oil and gas fields. For instance, the physics-based models 30 may be utilized to simulate the flow of fluids in a reservoir, a well, or in a pipeline network by taking into account various characteristics such as reservoir area, number of wells, well path, well tubing radius, well tubing size, tubing length, tubing geometry, temperature gradient, and types of fluids which are received in the physics-based simulator. The physics-based simulator 26, in creating a model, may also receive estimated or uncertain input data such as reservoir reserves.

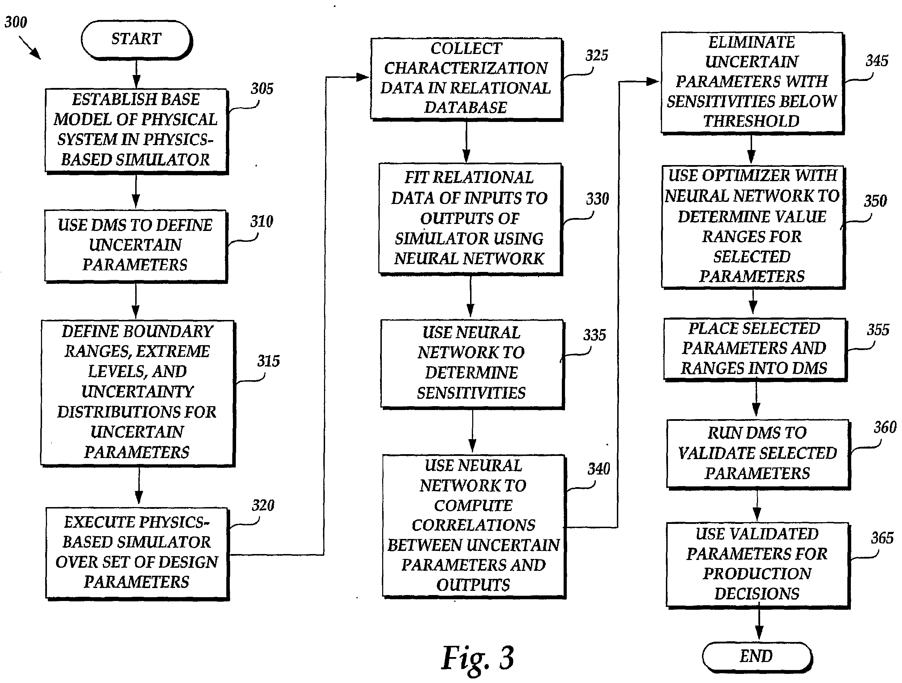

Referring now to FIGURE 3, an illustrative routine 300 will be described illustrating a process for fast updating of oil and gas field production models using a physical and proxy simulator. When reading the discussion of the illustrative routines presented herein, it should be appreciated that the logical operations of various embodiments of the present invention are implemented (1) as a sequence of computer implemented acts or program modules running on a computing system and/or (2) as interconnected machine logic circuits or circuit modules within the computing system.

The implementation is a matter of choice dependent on the performance requirements of the computing system implementing the invention. Accordingly, the logical operations illustrated in FIGURE 3, and making up illustrative embodiments of the present invention described herein are referred to variously as operations, structural devices, acts or modules. It will be recognized by one skilled in the art that these operations, structural devices, acts and modules may be implemented in software, in firmware, in special purpose digital logic, and any combination thereof without deviating from the scope of the present invention as recited within the claims attached hereto.

The illustrative routine 300 begins at operation 305 where the DMS application 24 executed by the CPU 5, instructs the physics-based simulator 26 to establish a "base" model of a physical system. It should be understood that a "base" model may be a physical or physics-based representation (in software) of a reservoir, a well, a pipeline network, or a processing system (such as a separation processing system) in an oil or gas field based on characteristic data such as reservoir area, number of wells, well path, well tubing radius, well tubing size, tubing length, tubing geometry, temperature gradient, and types of fluids which are received in the physics-based simulator. The physics-based simulator 26, in creating a "base" model, may also receive estimated or uncertain input data such as reservoir reserves. It should be understood that one ore more physics-based simulators 26 may be utilized in the embodiments of the invention.

The routine 300 then continues from operation 305 to operation 310 where the DMS application 24 automatically defines uncertain parameters (i.e., unknown parameters) with respect to the base model. Uncertain parameters comprise permeability by reservoir zone, net-to-gross, well skin, fault transmissibility, vertical-to-horizontal permeability ratio, and wait on cement ("WOC").

Once the uncertain parameters are defined, the routine 300 then continues from operation 310 to operation 315 where the DMS application 24 defines boundary limits, for the uncertain parameters. In particular, the DMS application 24 utilizes an experimental design process to define boundary limits for each uncertain parameter including extreme levels (e.g., a maximum, midpoint, or minimum) of values for each uncertain parameter. The DMS application 24 may also calculate an uncertainty distribution for each uncertain parameter. Those skilled in the art will appreciate that the uncertainty distribution may be determined through the application of one or more probability density functions. In one embodiment, the experimental design process utilized by the DMS application 24 may be the well known Orthogonal Array, factorial, or Box-Behnken experimental design processes.

The routine 300 then continues from operation 315 to operation 320 where the DMS application 24 automatically executes the physics-based simulator 26 over the set of uncertain parameters as defined by the boundary limits and the uncertainty distribution determined in operation 315. It should be understood that, from this point forward, these parameters will be referred to herein as "design" parameters. In executing the set of design parameters, the physics-based simulator 26 generates a series of outputs which is used to make a number of production predictions. The physics-based simulator generates outputs related to the flow of fluid in a reservoir including at least one of pressures, hydrocarbon flow rates, water flow rates, and temperatures which are based on a range of permeability values defined by the DMS application 24.

The routine 300 then continues from operation 320 to operation 325 where the DMS application 24 collects characterization data in a relational database, such as the integrated production drilling and engineering database 116. The characterization data may include value ranges associated with the design parameters as determined in operation 315 (i.e., the design parameter data) as well as the outputs from the physics-based simulator 26.

The routine 300 then continues from operation 325 to operation 330 where the DMS application 24 utilizes a regression equation to fit the design parameter data (i.e., the relational data of inputs) to the outputs of the physics-based simulator 26 using a proxy model. As used in the foregoing description and the appended claims, a proxy model is a mathematical equation utilized as a proxy for the physics-based models produced by the physics-based simulator 26. Those skilled in the art will appreciate that in the various embodiments of the invention, the proxy model may be a neural network, a polynomial expansion, a support vector machine, or an intelligent agent. An illustrative proxy model which may be utilized in one embodiment of the invention is given by the following equation:

$$z_k = g\left(\sum_j w_{kj} z_j\right)$$

It should be understood that in accordance with an embodiment of the invention, a proxy model may be utilized to simultaneously proxy multiple physics-based simulators that predict flow and chemistry over time.

The routine 300 then continues from operation 330 to operation 335 where the DMS application 24 uses the proxy model to determine sensitivities for the design parameters. As defined herein, "sensitivity" is a derivative of an output of the physics-based simulator 26 with respect to a design parameter within the proxy model. For instance, a sensitivity may be the derivative of hydrocarbon oil production with respect to permeability in a reservoir. In one embodiment, the derivative for each output with respect to each design parameter may be computed on the proxy model equation (shown above). The routine 300 then continues from operation 335 to operation 340 where the DMS application 24 uses the proxy model to compute correlations between the design parameters and the outputs of the physics-based simulator 26.

The routine 300 then continues from operation 340 to operation 345 where the DMS application 24 eliminates design parameters from the proxy model for which the sensitivities are below a threshold. In particular, in accordance with an embodiment of the invention, the DMS application 24 may eliminate a design parameter when the sensitivity or derivative for that design parameter, as determined by the proxy model, is determined to be close to a zero value. Thus, it will be appreciated that one or more of the uncertain parameters (i.e., permeability by reservoir zone, net-to-gross, well skin, fault transmissibility, vertical-to-horizontal permeability ratio, and WOC) which were discussed above in operation 310, may be eliminated as being unimportant or as having a minimal impact. It should be understood that the non-eliminated or important parameters are selected for optimization (i.e., selected parameters) as will be discussed in greater detail in operation 350.

The routine 300 then continues from operation 345 to operation 350 where the DMS application 24 uses the real-time optimization module 28 with the proxy model to determine value ranges for the selected parameters (i.e., the non-eliminated parameters) determined in operation 345. In particular, the real-time optimization module 28 generates a misfit function representing a squared difference between the outputs from the proxy model and the observed real-time data retrieved from the field sensors 106 and stored in the databases 114 and 116. Illustrative misfit functions for a well which may be utilized in the various embodiments of the invention are given by the following equations:

$$Obj = \sum_i w_i \sum_t w_t (sim(i,t) - \dot{his}(i,t))^2$$

$$Obj = \sum_i w_i \left(\sum_t w_t (NormalSim(i,t) - NormalHis(i,t))^2\right)$$

where $w_i$ = weight for well i, $w_t$ = weight for time t, $sim(i,t)$ = simulated or normalized value for well i at time t, and $his(i,t)$ = historical or normalized value for well i at time t.

It should be understood that the optimized value ranges determined by the real-time optimization module 28 are values for which the misfit function is small (i.e., near zero). It should be further understood that the selected parameters and optimized value ranges are representative of a proxy model which may be executed and validated in the physics-based simulator 26, as will be described in greater detail below.

The routine 300 then continues from operation 350 to operation 355 where the real-time optimization module 28 places the selected parameters (determined in operation 345) and the optimized value ranges (determined in operation 350) back into the DMS application 24 which then executes the physics-based simulator 26 to validate the selected parameters at operation 360. It should be understood that all of the operations discussed above with respect to the DMS application 24 are automated operations on the computer system 2.

The routine 300 then continues from operation 360 to operation 365 where the validated parameters may then be used to make production decisions. The routine 300 then ends.

Based on the foregoing, it should be appreciated that the various embodiments of the invention include methods, systems, and computer-readable media for fast updating of oil and gas field production models using a physical and proxy simulator. A physics-based simulator in a dynamic asset model computer system is utilized to span the range of possibilities for unknown parameters which are uncertain. A decision management application running on the computer system is used to build a proxy model that simulates a physical system (i.e., a reservoir, well, or pipeline network). It will be appreciated that the simulation performed by the proxy model is almost instantaneous, and thus faster than traditional physics-based simulators which are slow and difficult to update. As a result of the proxy model, physics-based models are updated faster and more frequently and the design process undertaken by reservoir engineers is thus facilitated.

Although the present invention has been described in connection with various illustrative embodiments, those of ordinary skill in the art will understand that many modifications can be made thereto within the scope of the claims that follow. Accordingly, it is not intended that the scope of the invention in any way be limited by the above description, but instead be determined entirely by reference to the claims that follow.

**Claims**

1. A computer-implemented method for fast updating of oil and gas field production models using a physical and proxy simulator, comprising:

    taking continuous measurements representative of at least one of surface and sub-surface properties of an oilfield using field sensors (106) and communicating data in real-time to remote terminal units (108) and from there to field controllers (110) performing, using field sensors, field monitoring of measured data;
    communicating the measurement data from the remote terminal units to one or more Supervisory Control and Data Acquisition systems (112), SCADAs, which in turn communicate received measurement data to databases (114, 116), the databases (114, 116) being communication with a dynamic asset model computer system (2), which executes the following steps:

        establishing a base model of a physical system in at least one physics-based simulator, wherein the physical system comprises at least one of a reservoir, a well, a pipeline network, and a processing system and wherein the at least one simulator simulates the flow of fluids in the at least one of a reservoir, a well, a pipeline network, and a processing system;
        defining boundary limits including extreme levels and an uncertainty distribution for each of a plurality of uncertain parameters of the physical system through an experimental design process, wherein the uncertain parameters as defined by the boundary limits and the uncertainty distribution comprise a set of design parameters;
        fitting data comprising a series of inputs, the inputs comprising the values associated with the set of design parameters, to outputs of the at least one simulator utilizing a proxy model, wherein the proxy model is a proxy for the at least one simulator, the at least one simulator comprising at least one of the following: a reservoir simulator, a pipeline network simulator, a process simulator, and a well simulator; and
        utilizing an optimizer with the proxy model to determine design parameter value ranges for which outputs from the proxy model match the observed measured data;
        utilizing the proxy model to calculate derivatives with respect to the design parameters of the physical system to determine sensitivities, wherein the sensitivities are determined by taking a derivative of an output of the at least one physics-based simulator with respect to each of the design parameters within the proxy model, the design parameters comprising permeability by reservoir zone, net-to-gross, well skin, fault transmissibility, vertical-to-horizontal permeability ratio, and wait on cement;
        utilizing the proxy model to compute correlations between the design parameters and the outputs of the at least one simulator;
        ranking the design parameters from the proxy model;
        eliminating the design parameters from the proxy model for which the sensitivities are below a threshold; and
        utilizing validated selected design parameters, not being eliminated, from the at least one simulator for production predictions related to the flow of fluid in a reservoir, the production predictions including at least one of pressures, hydrocarbon flow rates, water flow rates, and temperatures which are based on a range of permeability values defined by a decision management application (24).

2. The method of claim 1 further comprising:

utilizing a decision management system to define a plurality of control parameters of the physical system for matching with the observed data;

automatically executing the at least one simulator over the set of validated selected design parameters to generate a series of outputs, the outputs representing production predictions; and

collecting characterization data in a relational database, the characterization data comprising values associated with the set of validated selected design parameters and values associated with the outputs from the at least one simulator.

3. The method of claim 2 further comprising:

placing the validated selected design parameters for which the sensitivities are not below a threshold and their ranges from the proxy model into the decision management system; and

running the decision management system as a global optimizer to validate the validated selected design parameters in the at least one simulator.

4. The method of claim 1 , wherein establishing a base model of a physical system in at least one physics-based simulator comprises creating a data representation of the physical system, wherein the data representation comprises the physical characteristics of the at least one of the reservoir, the well, the pipeline network, and the processing system including dimensions of the reservoir, number of wells in the reservoir, well path, well tubing size, tubing geometry, temperature gradient, types of fluids, and estimated data values of other parameters associated with the physical system.

5. The method of claim 1, wherein defining boundary limits including extreme levels and an uncertainty distribution for each of the plurality of uncertain parameters of the physical system through an experimental design process comprises defining boundary limits including extreme levels and an uncertainty distribution for permeability, fault transmissibility, pore volume, and well skin parameters, utilizing at least one of Orthogonal Ray, factorial, and Box-Behnken experimental design processes.

6. The method of claim 1, further comprising removing the design parameters from the proxy model which are determined by a user to have a minimal impact on the physical system.

7. The method of claim 1, wherein utilizing an optimizer with the proxy model to determine design parameter value ranges comprises utilizing the optimizer with at least one of the following: a neural network, a polynomial expansion, a support vector machine, and an intelligent agent.

8. A system for fast updating of oil and gas field production models using a physical and proxy simulator, comprising:

a memory for storing executable program code; and

a processor, functionally coupled to the memory, the processor being responsive to computer-executable instructions contained in the program code and operative to:

take continuous measurements representative of at least one of surface and sub-surface properties of an oilfield using field sensors (106) and communicating data in real-time to remote terminal units (108) and from there to field controllers (100) performing, using field sensors, field monitoring of measured data;

communicate the measurement data from the remote terminal units to one or more Supervisory Control and Data Acquisition systems (112), SCADAs, which in turn communicate received measurement data to databases (114, 116), the databases (114, 116) being communication with a dynamic asset model computer system (2);

establish a base model of a physical system in at least one physics-based simulator, wherein the physical system comprises at least one of a reservoir, a well, a pipeline network, and a processing system and wherein the at least one simulator simulates the flow of fluids in the at least one of a reservoir, a well, a pipeline network, and a processing system;

define boundary limits including extreme levels and an uncertainty distribution for each of a plurality of uncertain parameters of the physical system through an experimental design process, wherein the uncertain parameters as defined by the boundary limits and the uncertainty distribution comprise a set of design parameters;

fit data comprising a series of inputs, the inputs comprising the values associated with the set of design parameters, to outputs of the at least one simulator utilizing a proxy model, wherein the proxy model is a proxy for the at least one simulator, the at least one simulator comprising at least one of the following: a reservoir simulator, a pipeline network simulator, a process simulator, and a well simulator; and

utilize an optimizer with the neural network to determine design parameter value ranges for which outputs from the proxy model match observed data retrieved by the field sensors;

utilize the proxy model to calculate derivatives with respect to the design parameters of the physical system to determine sensitivities, wherein the sensitivities are determined by taking a derivative of an output of the at least one physics-based simulator with respect to each of the design parameters within the proxy model, the design parameters comprising permeability by reservoir zone, net-to-gross, well skin, fault transmissibility, vertical-to-horizontal permeability ratio, and wait on cement;

utilize the proxy model to compute correlations between the design parameters and the outputs of the at least one simulator;

rank the design parameters from the proxy model;

eliminate the design parameters from the proxy model for which the sensitivities are below a threshold; and

utilize validated selected design parameters, not being eliminated, from the at least one simulator for production predictions related to the flow of fluid in a reservoir, the production predictions including at least one of pressures, hydrocarbon flow rates, water flow rates, and temperatures which are based on a range of permeability values defined by a decision management application (24).

9. The system of claim 8, wherein the processor is further operative to:

utilize a decision management system to define a plurality of control parameters of the physical system for matching with the observed data;

automatically execute the at least one simulator over the set of validated selected design parameters to generate a series of outputs, the outputs representing production predictions; and

collect characterization data in a relational database, the characterization data comprising values associated with the set of validated selected design parameters and values associated with the outputs from the at least one simulator.

10. The system of claim 9, wherein the processor is further operative to:

place the validated selected design parameters for which the sensitivities are not below a threshold and their ranges from the proxy model into the decision management system; and

run the decision management system as a global optimizer to validate the validated selected design parameters in the at least one simulator.

11. The system of claim 8, wherein establishing a base model of a physical system in at least one physics-based simulator comprises creating a data representation of the physical system, wherein the data representation comprises the physical characteristics of the at least one of the reservoir, the well, the pipeline network, and the processing system including dimensions of the reservoir, number of wells in the reservoir, well path, well tubing size, tubing geometry, temperature gradient, types of fluids, and estimated data values of other parameters associated with the physical system.

12. The system of claim 8, wherein defining boundary limits including extreme levels and an uncertainty distribution for each of the plurality of uncertain parameters of the physical system through an experimental design process comprises defining boundary limits including extreme levels and an uncertainty distribution for permeability, fault transmissibility, pore volume, and well skin parameters, utilizing at least one of Orthogonal Ray, factorial, and Box-Behnken experimental design processes.

13. A computer-readable medium containing computer-executable instructions, which when executed on the system of claim 8 perform a method for fast updating of oil and gas field production models using a physical and proxy simulator as claimed in any of claims 1 to 7.

**Patentansprüche**

1. Computerimplementiertes Verfahren zum schnellen Aktualisieren von Öl- und Gasfeldproduktionsmodellen unter Verwendung eines physikalischen und Proxy-Simulators, umfassend:

Durchführen von kontinuierlichen Messungen, die für mindestens eine der Oberflächen- und Untergrundeigenschaften eines Ölfelds repräsentativ sind, unter Verwendung von Feldsensoren (106) und Kommunizieren von Daten in Echtzeit an entfernte Terminaleinheiten (108) und von dort an Feldsteuerungen (110), die unter Verwendung von Feldsensoren eine Feldüberwachung gemessener Daten funktionieren;

Kommunizieren der Messdaten von den entfernten Terminaleinheiten zu einem oder mehreren Überwachungssteuerungs- und Datenerfassungssystemen (112), SCADAs, die ihrerseits empfangene Messdaten an Datenbanken (114, 116) übermitteln, wobei die Datenbanken (114, 116) mit einem dynamischen Anlagenmodell-Computersystem (2) kommunizieren, das die folgenden Schritte ausführt:

Erstellen eines Basismodells eines physikalischen Systems in mindestens einem physikbasierten Simulator, wobei das physikalische System mindestens eines von einem Reservoir, einem Bohrloch, einem Pipeline-Netzwerk und einem Verarbeitungssystem umfasst, und wobei der mindestens eine Simulator den Fluss von Fluiden in einem Reservoir, einem Bohrloch, einem Rohrleitungsnetz und/oder einem Verarbeitungssystem simuliert;

Definieren von Grenzgrenzen einschließlich extremer Niveaus und einer Unsicherheitsverteilung für jeden einer Vielzahl von unsicheren Parametern des physikalischen Systems durch einen experimentellen Entwurfsprozess, wobei die unsicheren Parameter, wie sie durch die Grenzgrenzen und die Unsicherheitsverteilung definiert sind, einen Satz von Entwurfsparametern umfassen;

Anpassen von Daten, die eine Reihe von Eingaben umfassen, wobei die Eingaben die Werte umfassen, die dem Satz von Entwurfsparametern zugeordnet sind, an Ausgaben des mindestens einen Simulators unter Verwendung eines Proxy-Modells, wobei das Stellvertretermodell ein Stellvertreter für den mindestens einen Simulator ist, wobei der mindestens eine Simulator mindestens eines der Folgenden umfasst:

einen Lagerstättensimulator, einen Pipelinenetzsimulator, einen Prozesssimulator und einen Bohrlochsimulator; und

Verwenden eines Optimierers mit dem Proxy-Modell, um Designparameter-Wertebereiche zu bestimmen, für die Ausgaben von dem Proxy-Modell mit den beobachteten gemessenen Daten übereinstimmen;

Verwenden des Proxy-Modells zum Berechnen von Ableitungen in Bezug auf die Entwurfsparameter des physikalischen Systems zum Bestimmen von Sensitivitäten, wobei die Sensitivitäten bestimmt werden, indem eine Ableitung einer Ausgabe des mindestens einen physikbasierten Simulators in Bezug auf jeden der Entwurfsparameter innerhalb des Proxy-Modells genommen wird, wobei die Entwurfsparameter die Permeabilität nach Reservoirzone, Netto zu Brutto, Bohrlochhaut, Verwerfungsübertragbarkeit, vertikales zu horizontales Permeabilitätsverhältnis und Wartezeit auf Zement umfassen;

Verwenden des Proxy-Modells zum Berechnen von Korrelationen zwischen den Entwurfsparametern und den Ausgaben des mindestens einen Simulators;

Einordnen der Entwurfsparameter aus dem Proxy-Modell; Eliminieren der Entwurfsparameter aus dem Proxy-Modell, für die die Empfindlichkeiten unter einem Schwellenwert liegen; und

Verwenden validierter ausgewählter Entwurfsparameter, die nicht eliminiert werden, aus dem mindestens einen Simulator für Produktionsvorhersagen in Bezug auf den Fluidfluss in einem Reservoir, wobei die Produktionsvorhersagen mindestens eines von Drücken, Kohlenwasserstoffdurchflussraten, Wasserdurchflussraten und Temperaturen beinhalten, die auf einem Bereich von Permeabilitätswerten basieren, die durch eine Entscheidungsverwaltungsanwendung (24) definiert sind.

**2.** Verfahren nach Anspruch 1, ferner umfassend:

Verwenden eines Entscheidungsverwaltungssystems zum Definieren einer Vielzahl von Steuerparametern des physikalischen Systems zum Abgleichen mit den beobachteten Daten;

automatisches Ausführen des mindestens einen Simulators über den Satz validierter ausgewählter Entwurfsparameter, um eine Reihe von Ausgaben zu erzeugen, wobei die Ausgaben Produktionsvorhersagen darstellen; und

Sammeln von Charakterisierungsdaten in einer relationalen Datenbank, wobei die Charakterisierungsdaten Werte, die dem Satz validierter ausgewählter Entwurfsparameter zugeordnet sind, und Werte umfassen, die den Ausgaben von dem mindestens einen Simulator zugeordnet sind.

**3.** Verfahren nach Anspruch 2, ferner umfassend:

Platzieren der validierten ausgewählten Entwurfsparameter, für die die Sensitivitäten nicht unter einem Schwellenwert liegen, und ihrer Bereiche aus dem Proxy-Modell in das Entscheidungverwaltungssystem; und Betreiben des Entscheidungsmanagementsystems als globaler Optimierer, um die validierten ausgewählten Entwurfsparameter in dem mindestens einen Simulator zu validieren.

4. Verfahren nach Anspruch 1, wobei das Erstellen eines Basismodells eines physikalischen Systems in mindestens einem physikbasierten Simulator das Erstellen einer Datendarstellung des physikalischen Systems umfasst, wobei die Datendarstellung die physikalischen Eigenschaften von mindestens einem von der Lagerstätte, dem Bohrloch, dem Pipelinenetz umfasst, und dem Verarbeitungssystem einschließlich Abmessungen des Reservoirs, Anzahl der Bohrlöcher in dem Reservoir, Bohrlochpfad, Bohrlochrohrgröße, Rohrgeometrie, Temperaturgradient, Arten von Fluiden und geschätzter Datenwerte anderer Parameter, die dem physikalischen System zugeordnet sind.

5. Verfahren nach Anspruch 1, wobei das Definieren von Grenzgrenzen einschließlich extremer Niveaus und einer Unsicherheitsverteilung für jeden der Vielzahl von unsicheren Parametern des physikalischen Systems durch einen experimentellen Entwurfsprozess Folgendes Definieren von Grenzgrenzen, einschließlich extremer Niveaus und einer Unsicherheitsverteilung für Permeabilität, Fehlerübertragbarkeit, Porenvolumen und Bohrlochhautparameter umfasst, wobei mindestens eines der experimentellen Designverfahren Orthogonal Ray, Factorial und Box-Behnken verwendet wird.

6. Verfahren nach Anspruch 1, ferner umfassend das Entfernen der Entwurfsparameter aus dem Proxy-Modell, die von einem Benutzer bestimmt werden, um eine minimale Auswirkung auf das physische System zu haben.

7. Verfahren nach Anspruch 1, wobei das Verwenden eines Optimierers mit dem Proxy-Modell zum Bestimmen von Designparameter-Wertebereichen das Verwenden des Optimierers mit mindestens einem der Folgenden umfasst: einem neuronalen Netzwerk, einer Polynomexpansion, einer Support-Vektor-Maschine und einer Intelligenz Agent.

8. System zum schnellen Aktualisieren von Öl- und Gasfeldproduktionsmodellen unter Verwendung eines physikalischen und Proxy-Simulators, umfassend:

einen Speicher zum Speichern von ausführbarem Programmcode; und
einen Prozessor, der funktional mit dem Speicher gekoppelt ist, wobei der Prozessor auf computerausführbare Anweisungen anspricht, die in dem Programmcode enthalten sind, und betreibbar ist, um:

unter Verwendung von Feldsensoren (106) kontinuierliche Messungen durchzuführen, die für mindestens eine der Oberflächen- und Untergrundeigenschaften eines Ölfelds repräsentativ sind, und Daten in Echtzeit an entfernte Terminaleinheiten (108) und von dort an Feldsteuerungen (100) zu übermitteln, die unter Verwendung von Feldsensoren eine Feldüberwachung von gemessenen Daten funktionieren;
die Messdaten von den entfernten Endgeräteinheiten an ein oder mehrere Überwachungs- und Datenerfassungssysteme (112), SCADAs zu übermitteln, die ihrerseits empfangene Messdaten an Datenbanken (114, 116) übermitteln, wobei die Datenbanken (114, 116) mit einem dynamischen Anlagenmodell-Computersystem (2) kommunizieren;
ein Basismodell eines physikalischen Systems in mindestens einem physikbasierten Simulator zu erstellen, wobei das physikalische System mindestens eines von einem Reservoir, einem Bohrloch, einem Pipeline-Netzwerk und einem Verarbeitungssystem umfasst, und wobei der mindestens eine Simulator den Fluss von Fluiden in einem Reservoir, einem Bohrloch, einem Rohrleitungsnetz und/oder einem Verarbeitungssystem simuliert;
Grenzlimits zu definieren, die Extremwerte und eine Unsicherheitsverteilung für jeden von mehreren unsicheren Parametern des physikalischen Systems durch einen experimentellen Entwurfsprozess umfassen, wobei die unsicheren Parameter, wie sie durch die Grenzgrenzen und die Unsicherheitsverteilung definiert sind, einen Satz von Entwurfsparametern umfassen;
Daten, die eine Reihe von Eingaben umfassen, an Ausgaben des mindestens einen Simulators unter Verwendung eines Proxy-Modells anzupassen, wobei die Eingaben die Werte umfassen, die dem Satz von Entwurfsparametern zugeordnet sind, wobei das Stellvertretermodell ein Stellvertreter für den mindestens einen Simulator ist, wobei der mindestens eine Simulator mindestens eines der Folgenden umfasst:

einen Lagerstättensimulator, einen Pipelinenetzsimulator, einen Prozesssimulator und einen Bohrlochsimulator; und
einen Optimierer mit dem neuronalen Netzwerk zu verwenden, um Designparameter-Wertebereiche zu bestimmen, für die Ausgaben von dem Proxy-Modell beobachteten Daten entsprechen, die von den Feldsensoren abgerufen werden;

das Proxy-Modell zu verwenden, um Ableitungen in Bezug auf die Designparameter des physikalischen Systems zu berechnen, um Sensitivitäten zu bestimmen, wobei die Sensitivitäten bestimmt werden, indem eine Ableitung einer Ausgabe des mindestens einen physikbasierten Simulators in Bezug auf jeden der Entwurfsparameter innerhalb des Proxy-Modells genommen wird, wobei die Entwurfsparameter die Permeabilität nach Reservoirzone, Netto zu Brutto, Bohrlochhaut, Verwerfungsübertragbarkeit, vertikales zu horizontales Permeabilitätsverhältnis und Wartezeit auf Zement umfassen;

das Proxy-Modell zu verwenden, um Korrelationen zwischen den Designparametern und den Ausgaben des mindestens einen Simulators zu berechnen;

die Entwurfsparameter aus dem Proxy-Modell einzuordnen; die Entwurfsparameter aus dem Proxy-Modell zu eliminieren, für die die Sensitivitäten unter einem Schwellenwert liegen; und

validierte ausgewählte Entwurfsparameter, die nicht eliminiert werden, aus dem mindestens einen Simulator für Produktionsvorhersagen in Bezug auf den Fluidfluss in einem Reservoir zu verwenden, wobei die Produktionsvorhersagen mindestens eines von Drücken, Kohlenwasserstoffdurchflussraten, Wasserdurchflussraten und Temperaturen umfassen, die auf einem Bereich von Permeabilitätswerten basieren, die durch eine Entscheidungsverwaltungsanwendung (24) definiert sind.

9. System nach Anspruch 8, wobei der Prozessor ferner betreibbar ist, um:

ein Entscheidungsverwaltungssystem zu verwenden, um eine Vielzahl von Steuerparametern des physikalischen Systems zum Abgleich mit den beobachteten Daten zu definieren;

den mindestens einen Simulator automatisch über den Satz validierter ausgewählter Entwurfsparameter auszuführen, um eine Reihe von Ausgaben zu erzeugen, wobei die Ausgaben Produktionsvorhersagen darstellen; und

um Charakterisierungsdaten in einer relationalen Datenbank zu sammeln, wobei die Charakterisierungsdaten Werte, die mit dem Satz von validierten ausgewählten Designparametern assoziiert sind, und Werte umfassen, die mit den Ausgaben von dem mindestens einen Simulator assoziiert sind.

10. System nach Anspruch 9, wobei der Prozessor ferner betreibbar ist, um:

die validierten ausgewählten Entwurfsparameter, für die die Sensitivitäten nicht unter einem Schwellenwert liegen, und ihre Bereiche aus dem Proxy-Modell in das Entscheidungsverwaltungssystem zu platzieren; und

das Entscheidungsmanagementsystem als globalen Optimierer laufen zu lassen, um die validierten ausgewählten Entwurfsparameter in dem mindestens einen Simulator zu validieren.

11. System nach Anspruch 8, wobei das Erstellen eines Basismodells eines physikalischen Systems in mindestens einem physikbasierten Simulator das Erstellen einer Datendarstellung des physikalischen Systems umfasst, wobei die Datendarstellung die physikalischen Eigenschaften der Lagerstätte, des Bohrlochs, des Rohrleitungsnetzwerks und/oder des Verarbeitungssystems umfasst, einschließlich Abmessungen der Lagerstätte, Anzahl der Bohrlöcher in der Lagerstätte, Bohrlochpfad, Bohrlochrohrgröße, Rohrgeometrie, Temperaturgradient, Arten von Fluiden und geschätzte Datenwerte anderer Parameter, die dem physikalischen System zugeordnet sind.

12. System nach Anspruch 8, wobei das Definieren von Grenzgrenzen einschließlich extremer Niveaus und einer Unsicherheitsverteilung für jeden der Vielzahl von unsicheren Parametern des physikalischen Systems durch einen experimentellen Entwurfsprozess Definieren von Grenzgrenzen, einschließlich extremer Niveaus und einer Unsicherheitsverteilung für Permeabilität, Fehlerübertragbarkeit, Porenvolumen und Bohrlochhautparameter umfasst, wobei mindestens eines der experimentellen Designverfahren Orthogonal Ray, Factorial und Box-Behnken verwendet wird.

13. Computerlesbares Medium, das computerausführbare Anweisungen enthält, die, wenn sie auf dem System nach Anspruch 8 ausgeführt werden, ein Verfahren zum schnellen Aktualisieren von Öl- und Gasfeldproduktionsmodellen unter Verwendung eines physikalischen und Proxy-Simulators nach einem der Ansprüche 1 bis 7 ausführen.

**Revendications**

1. Procédé mis en œuvre par ordinateur pour une mise à jour rapide de modèles de production de champs de pétrole et de gaz à l'aide d'un simulateur physique et mandataire, comprenant :

la prise de mesures continues représentatives d'au moins l'une des propriétés de surface et de sous-surface d'un champ de pétrole à l'aide de capteurs de champ (106) et la communication de données en temps réel vers des unités de terminal à distance (108) et depuis celles-ci vers des contrôleurs de champ (110) effectuant, à l'aide capteurs de champ, une surveillance sur le terrain des données mesurées ;

la communication des données de mesure depuis les unités de terminal à distance vers un ou plusieurs systèmes de commande de surveillance et d'acquisition de données (112), SCADA, qui à leur tour communiquent les données de mesure reçues vers des bases de données (114, 116), les bases de données (114, 116) étant en communication avec un système informatique de modèle d'actif dynamique (2), qui exécute les étapes suivantes :

l'établissement d'un modèle de base d'un système physique dans au moins un simulateur basé sur la physique, dans lequel le système physique comprend au moins l'un d'un réservoir, d'un puits, d'un réseau de pipelines et d'un système de traitement et dans lequel l'au moins un simulateur simule l'écoulement des fluides dans l'au moins un d'un réservoir, d'un puits, d'un réseau de pipelines et d'un système de traitement ;

la définition des limites de démarcation comportant des niveaux extrêmes et une répartition d'incertitude pour chacun d'une pluralité de paramètres incertains du système physique par le biais d'un processus de conception expérimentale, dans lequel les paramètres incertains tels que définis par les limites de démarcation et la répartition d'incertitude comprennent un ensemble de paramètres de conception ;

l'ajustement des données comprenant une série d'entrées, les entrées comprenant les valeurs associées à l'ensemble de paramètres de conception, vers les sorties de l'au moins un simulateur utilisant un modèle mandataire, dans lequel le modèle mandataire est un mandataire pour l'au moins un simulateur, l'au moins un simulateur comprenant au moins l'un des éléments suivants : un simulateur de réservoir, un simulateur de réseau de pipelines, un simulateur de processus et un simulateur de puits ; et

l'utilisation d'un optimiseur avec le modèle mandataire pour déterminer des plages de valeurs de paramètres de conception pour lesquelles les sorties du modèle mandataire correspondent aux données mesurées observées ;

l'utilisation du modèle mandataire pour calculer des dérivées par rapport aux paramètres de conception du système physique afin de déterminer des sensibilités, dans lequel les sensibilités sont déterminées en prenant une dérivée d'une sortie de l'au moins un simulateur basé sur la physique par rapport à chacun des paramètres de conception au sein du modèle mandataire, les paramètres de conception comprenant la perméabilité par zone de réservoir, le rapport net sur brut, le revêtement de puits, la transmissibilité des failles, le rapport de perméabilité verticale sur horizontale et l'attente sur le ciment ;

l'utilisation du modèle mandataire pour calculer des corrélations entre les paramètres de conception et les sorties de l'au moins un simulateur ;

le classement des paramètres de conception depuis le modèle mandataire ;

l'élimination des paramètres de conception depuis le modèle mandataire pour lesquels les sensibilités sont inférieures à un seuil ; et

l'utilisation des paramètres de conception sélectionnés validés, non éliminés, de l'au moins un simulateur pour des prédictions de production liées à l'écoulement de fluide dans un réservoir, les prédictions de production comportant au moins l'un parmi des pressions, des débits d'hydrocarbures, des débits d'eau et des températures qui sont basés sur une plage de valeurs de perméabilité définies par une application de gestion de décision (24).

2. Procédé selon la revendication 1, comprenant en outre :

l'utilisation d'un système de gestion de décision pour définir une pluralité de paramètres de commande du système physique pour la mise en correspondance avec les données observées ;

l'exécution automatique de l'au moins un simulateur sur l'ensemble de paramètres de conception sélectionnés validés pour générer une série de sorties, les sorties représentant des prédictions de production ; et

la collecte des données de caractérisation dans une base de données relationnelle, les données de caractérisation comprenant des valeurs associées à l'ensemble de paramètres de conception sélectionnés validés et des valeurs associées aux sorties de l'au moins un simulateur.

3. Procédé selon la revendication 2, comprenant en outre :

le placement des paramètres de conception sélectionnés validés pour lesquels les sensibilités ne sont pas inférieures à un seuil et de leurs plages depuis le modèle mandataire dans le système de gestion de décision ; et

l'exécution du système de gestion de décision en tant qu'optimiseur global pour valider les paramètres de conception sélectionnés validés dans l'au moins un simulateur.

4. Procédé selon la revendication 1, dans lequel l'établissement d'un modèle de base d'un système physique dans au moins un simulateur basé sur la physique comprend la création d'une représentation de données du système physique, dans lequel la représentation de données comprend les caractéristiques physiques de l'au moins un du réservoir, du puits, du réseau de pipelines et du système de traitement comportant les dimensions du réservoir, le nombre de puits dans le réservoir, la trajectoire du puits, la taille du tubage du puits, la géométrie du tubage, le gradient de température, les types de fluides et les valeurs de données estimées d'autres paramètres associés au système physique.

5. Procédé selon la revendication 1, dans lequel la définition de limites de démarcation comportant des niveaux extrêmes et une répartition d'incertitude pour chacun de la pluralité de paramètres incertains du système physique par le biais d'un processus de conception expérimentale comprend la définition de limites de démarcation comportant des niveaux extrêmes et une répartition d'incertitude pour la perméabilité, la transmissibilité des failles, le volume de pores et les paramètres de revêtement de puits, en utilisant au moins l'un des processus de conception expérimentale de rayon orthogonal, factoriel et de Box-Behnken.

6. Procédé selon la revendication 1, comprenant en outre la suppression des paramètres de conception du modèle mandataire qui sont déterminés par un utilisateur comme ayant un impact minimal sur le système physique.

7. Procédé selon la revendication 1, dans lequel l'utilisation d'un optimiseur avec le modèle mandataire pour déterminer des plages de valeurs de paramètres de conception comprend l'utilisation de l'optimiseur avec au moins l'un des éléments suivants : un réseau neuronal, une expansion polynomiale, une machine à vecteurs de support et un agent intelligent.

8. Système de mise à jour rapide de modèles de production de champs de pétrole et de gaz à l'aide d'un simulateur physique et mandataire, comprenant :

    une mémoire pour stocker un code de programme exécutable ; et
    un processeur, fonctionnellement couplé à la mémoire, le processeur étant sensible aux instructions exécutables par ordinateur contenues dans le code de programme et fonctionnant pour :

        prendre des mesures continues représentatives d'au moins l'une des propriétés de surface et de sous-surface d'un champ de pétrole à l'aide de capteurs de champ (106) et communiquer des données en temps réel vers des unités de terminal à distance (108) et depuis celles-ci vers des contrôleurs de champ (100) effectuant, à l'aide capteurs de champ, une surveillance sur le terrain des données mesurées ;
        communiquer les données de mesure depuis des unités de terminal à distance vers un ou plusieurs systèmes de commande de surveillance et d'acquisition de données (112), SCADA, qui à leur tour communiquent les données de mesure reçues à des bases de données (114, 116), les bases de données (114, 116) étant en communication avec un système informatique de modèle d'actif dynamique (2) ;
        établir un modèle de base d'un système physique dans au moins un simulateur basé sur la physique, dans lequel le système physique comprend au moins l'un d'un réservoir, d'un puits, d'un réseau de pipelines et d'un système de traitement et dans lequel l'au moins un simulateur modélise l'écoulement des fluides dans l'au moins un d'un réservoir, d'un puits, d'un réseau de pipelines et d'un système de traitement ;
        définir des limites de démarcation comprenant des niveaux extrêmes et une répartition d'incertitude pour chacun d'une pluralité de paramètres incertains du système physique par le biais d'un processus de conception expérimentale, dans lequel les paramètres incertains tels que définis par les limites de démarcation et la répartition d'incertitude comprennent un ensemble de paramètres de conception ;
        ajuster des données comprenant une série d'entrées, les entrées comprenant les valeurs associées à l'ensemble de paramètres de conception, aux sorties de l'au moins un simulateur utilisant un modèle mandataire, dans lequel le modèle mandataire est un mandataire pour l'au moins un simulateur, l'au moins un simulateur comprenant au moins l'un des éléments suivants : un simulateur de réservoir, un simulateur de réseau de pipelines, un simulateur de processus et un simulateur de puits ; et
        utiliser un optimiseur avec le réseau neuronal pour déterminer des plages de valeurs de paramètres de conception pour lesquelles les sorties du modèle mandataire correspondent aux données observées récupérées par les capteurs de champ ;
        utiliser le modèle mandataire pour calculer des dérivées par rapport aux paramètres de conception du système physique afin de déterminer des sensibilités, dans lesquelles les sensibilités sont déterminées en prenant une dérivée d'une sortie de l'au moins un des simulateurs basés sur la physique par rapport à chacun des paramètres de conception dans le modèle mandataire, les paramètres de conception comprenant la perméabilité par zone de réservoir, le rapport net sur brut, le revêtement du puits, la transmissibilité des failles, le rapport de perméabilité verticale sur horizontale et l'attente sur le ciment ;

utiliser le modèle mandataire pour calculer des corrélations entre les paramètres de conception et les sorties de l'au moins un simulateur ;

classer les paramètres de conception depuis le modèle mandataire ;

éliminer les paramètres de conception depuis le modèle mandataire pour lesquels les sensibilités sont inférieures à un seuil ; et

utiliser des paramètres de conception sélectionnés validés, non éliminés, de l'au moins un simulateur pour des prédictions de production liées à l'écoulement de fluide dans un réservoir, les prédictions de production comprenant au moins l'un parmi des pressions, des débits d'hydrocarbures, des débits d'eau et des températures qui sont basés sur une plage de valeurs de perméabilité définies par une application de gestion de décision (24).

9.  Système selon la revendication 8, dans lequel le processeur fonctionne en outre pour :

utiliser un système de gestion de décision pour définir une pluralité de paramètres de commande du système physique pour la mise en correspondance avec les données observées ;

exécuter automatiquement l'au moins un simulateur sur l'ensemble de paramètres de conception sélectionnés validés pour générer une série de sorties, les sorties représentant des prédictions de production ; et

collecter des données de caractérisation dans une base de données relationnelle, les données de caractérisation comprenant des valeurs associées à l'ensemble de paramètres de conception sélectionnés validés et des valeurs associées aux sorties de l'au moins un simulateur.

10. Système selon la revendication 9, dans lequel le processeur fonctionne en outre pour :

placer les paramètres de conception sélectionnés validés pour lesquels les sensibilités ne sont pas inférieures à un seuil et leurs plages depuis le modèle mandataire dans le système de gestion de décision ; et

exécuter le système de gestion de décision en tant qu'optimiseur global pour valider les paramètres de conception sélectionnés validés dans l'au moins un simulateur.

11. Système selon la revendication 8, dans lequel l'établissement d'un modèle de base d'un système physique dans au moins un simulateur basé sur la physique comprend la création d'une représentation de données du système physique, dans lequel la représentation de données comprend les caractéristiques physiques de l'au moins l'un du réservoir, du puits, du réseau de pipelines et du système de traitement comprenant les dimensions du réservoir, le nombre de puits dans le réservoir, la trajectoire du puits, la taille du tubage du puits, la géométrie du tubage, le gradient de température, les types de fluides et les valeurs de données estimées d'autres paramètres associés au système physique.

12. Système selon la revendication 8, dans lequel la définition de limites de démarcation comprenant des niveaux extrêmes et une répartition d'incertitude pour chacun de la pluralité de paramètres incertains du système physique par le biais d'un processus de conception expérimentale comprend la définition de limites de démarcation comprenant des niveaux extrêmes et une distribution d'incertitude pour la perméabilité, la transmissibilité des failles, le volume de pores et les paramètres de revêtement de puits, en utilisant au moins l'un des processus de conception expérimentale de rayon orthogonal, factoriel et de Box-Behnken.

13. Support lisible par ordinateur contenant des instructions exécutables par ordinateur, qui, lorsqu'elles sont exécutées sur le système selon la revendication 8, exécutent un procédé de mise à jour rapide de modèles de production de champs de pétrole et de gaz à l'aide d'un simulateur physique et mandataire selon l'une quelconque des revendications 1 à 7.

Fig. 1

EP 1 984 860 B1

Fig. 2

300

START → ESTABLISH BASE MODEL OF PHYSICAL SYSTEM IN PHYSICS-BASED SIMULATOR (305) → USE DMS TO DEFINE UNCERTAIN PARAMETERS (310) → DEFINE BOUNDARY RANGES, EXTREME LEVELS, AND UNCERTAINTY DISTRIBUTIONS FOR UNCERTAIN PARAMETERS (315) → EXECUTE PHYSICS-BASED SIMULATOR OVER SET OF DESIGN PARAMETERS (320)

COLLECT CHARACTERIZATION DATA IN RELATIONAL DATABASE (325) → FIT RELATIONAL DATA OF INPUTS TO OUTPUTS OF SIMULATOR USING NEURAL NETWORK (330) → USE NEURAL NETWORK TO DETERMINE SENSITIVITIES (335) → USE NEURAL NETWORK TO COMPUTE CORRELATIONS BETWEEN UNCERTAIN PARAMETERS AND OUTPUTS (340)

ELIMINATE UNCERTAIN PARAMETERS WITH SENSITIVITIES BELOW THRESHOLD (345) → USE OPTIMIZER WITH NEURAL NETWORK TO DETERMINE VALUE RANGES FOR SELECTED PARAMETERS (350) → PLACE SELECTED PARAMETERS AND RANGES INTO DMS (355) → RUN DMS TO VALIDATE SELECTED PARAMETERS (360) → USE VALIDATED PARAMETERS FOR PRODUCTION DECISIONS (365) → END

*Fig. 3*

19

**EP 1 984 860 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040220790 A